# EUROPÄISCHE PATENTSCHRIFT

(11) **EP 1 707 862 B1**
(45) Veröffentlichungstag und Bekanntmachung des Hinweises auf die Patenterteilung: **30.01.2008**
(21) Anmeldenummer: 05025819.3
(22) Anmeldetag: 25.11.2005
(51) Int. Cl.: F16L 23/18, F16J 15/10, F16J 15/12, F16J 15/06

(54) **Flanschdichtung**
Gasket for a flanged joint
Joint pour raccord à brides

(30) Priorität: 30.03.2005 DE 202005004967 U
(43) Veröffentlichungstag der Anmeldung: 04.10.2006
(73) Patentinhaber: Klinger AG, 6304 Zug (CH)
(72) Erfinder: Eisenach, Frank-Peter, 49929 Wermelskirchen (DE)
(74) Vertreter: Spierenburg, Pieter

(56) Entgegenhaltungen:
- DE-B- 1 023 736
- DE-U1- 8 802 972
- FR-A- 2 810 717
- GB-A- 816 559
- GB-A- 2 340 570

## Beschreibung

Die Erfindung betrifft eine ringförmige Flanschdichtung aus einem gummielastischen Werkstoff, die zwei Ringe umfaßt.

Bei der Verlegung von Rohrleitungen, insbesondere bei im Erdreich verlegten Rohrleitungen mit Paßstücken und Flanschen zum Anschluß an ein Hausnetz, einen Hydranten od. dgl. erfolgt die Verlegung nicht immer genügend gerade, so daß sich Fluchtfehler und damit zwischen miteinander zu verschraubenden Teilen wie Flanschen keilförmige Spalte ergeben.

Um dies auszugleichen, ist aus GB-A-816 559 bekannt, eine Anpassungseinrichtung zwischenzuschalten, die aus zwei gegeneinander verdrehbaren, keilförmigen, metallischen Ausgleichsringen, die aneinander über Stifte befestigt und gegeneinander abgedichtet sind, sowie zwei separaten, äußeren, ringförmigen Flanschdichtungen mit im wesentlichen planparallelen Dichtflächen besteht. Diese Einrichtung ist nicht nur aufwendig, sondern auch schwierig zu handhaben und anzubringen.

Aufgabe der Erfindung ist es, eine ringförmige Flanschdichtung aus einem gummielastischen Werkstoff zu schaffen, die es ermöglicht, Fluchtfehler auszugleichen.

Diese Aufgabe wird entsprechend den Merkmalen des Anspruchs 1 gelöst.

Dadurch, daß die Flanschdichtung zwei Ringe umfaßt, die quer zur Ringachse keilförmig ausgebildet sind und an einander zugekehrten Seiten senkrecht zur Ringachse über plane Flächen aneinander grenzen und dort verdrehbar miteinander in Eingriff stehen, läßt sich die Flanschdichtung zwischen einer Position, in der ihre Außenflächen im wesentlichen radial und spiegelsymmetrisch zur Ringachse angeordnet sind (bei planen Außenflächen planparallel), Spreizwinkel 0°, und einer Position, in der ihre Außenflächen senkrecht zur Ringachse und spiegelsymmetrisch hierzu einen maximalen Spreizwinkel einnehmen, kontinuierlich verstellen. Die Position läßt sich einfach durch Verdrehen der beiden Ringe gegeneinander an der Baustelle erreichen. Die Handhabung ist daher denkbar einfach. Gleiches gilt für die Herstellung. Die Ringe können in entsprechenden Formen aus einem gummielastischen Werkstoff vulkanisiert und danach durch Schnappeingriff miteinander verbunden werden.

Weitere Ausgestaltungen der Erfindung sind der nachfolgenden Beschreibung und den Unteransprüchen zu entnehmen.

Die Erfindung wird nachstehend anhand von in den beigefügten Abbildungen dargestellten Ausführungsbeispielen näher erläutert.

Fig. 1 zeigt im Schnitt eine Ausführungsform einer Flanschdichtung bei maximalem Spreizwinkel.

Fig. 2 zeigt vergrößert einen Ausschnitt von Fig. 1.

Fig. 3 und 4 zeigen zwei weitere Ausführungsformen einer Flanschdichtung bei maximalem Spreizwinkel.

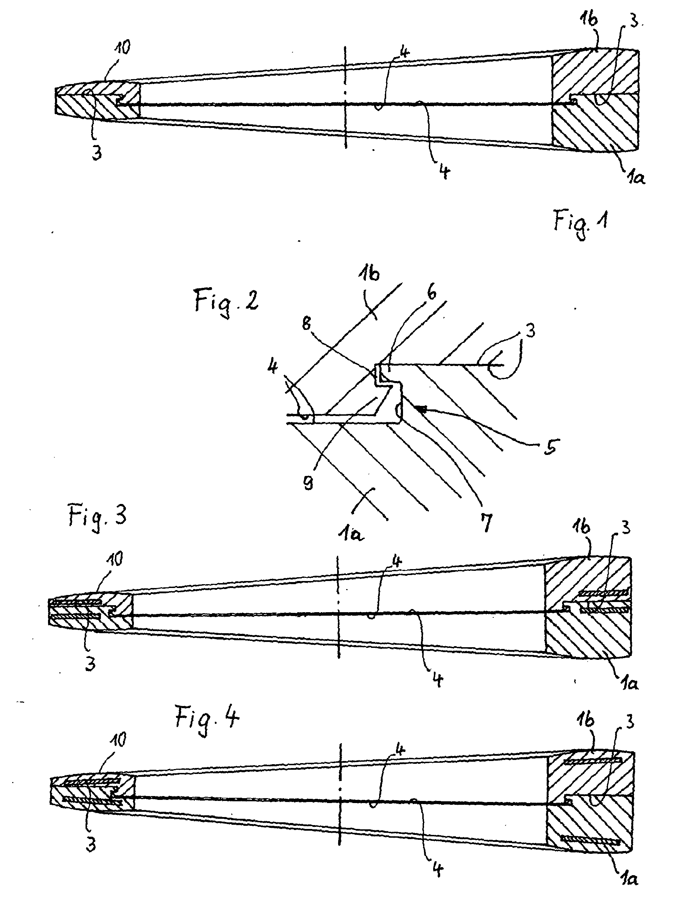

Die in Fig. 1 und 2 dargestellte Flanschdichtung umfaßt zwei Ringe 1a, 1b aus einem gummielastischen Material, die quer zur Ringachse 2 keilförmig ausgebildet sind und an einander zugekehrten Seiten senkrecht zur Ringachse 2 über plane Flächen 3, 4 und dort verdrehbar miteinander in Eingriff stehen.

Bei dem dargestellten Ausführungsbeispiel weisen die Ringe 1a, 1b an den einander zugekehrten Seiten jeweils zwei zueinander parallele, zueinander höhenversetzte Flächen 3, 4 auf, wobei die so gebildete, umlaufende Schulter 5 zur Ausbildung eines Schnappeingriffs zwischen den beiden Ringen 1a, 1b genutzt ist. Hierzu weist der in den Figuren untere Ring 1a eine von einer umlaufenden Nase 6 begrenzte, zur Ringachse 2 offene, umlaufende Nut 7 auf, während der in den Figuren obere Ring 1b im wesentlichen korrespondierend ausgebildet ist, d.h. ebenfalls eine umlaufende Nut 8 zur Aufnahme der Nase 6 des Rings 1a und eine umlaufende Nase 9 zum Einschnappen in die Nut 7 des Rings 1a aufweist. Die Nase 9 ist dabei zweckmäßigerweise zum Erleichtern des Einschnappens abgeschrägt, während die Stärke der Nase 6 so gewählt ist, daß sie sich beim Einschnappen entsprechend verformen kann.

Die Nut 7 mit ihrer Nase 6 kann auch zum Ringumfang hin offen bzw. am Außenumfang eines der Ringe angeordnet sein, wobei die Nase 9 entsprechend anzuordnen ist.

Die einander zugekehrten Flächen der Ringe 1a, 1b können aber auch plan ohne Schulter sein, wobei in einer Fläche eine hinterschnittene Nut angeordnet ist, in die eine entsprechende Nase am anderen Ring einschnappen kann.

Die Außenflächen 10 der Ringe 1a, 1b können bombiert sein. Zwischen den beiden Ringen 1a, 1b kann gegebenenfalls auch ein von entsprechenden Nuten teilweise aufgenommener O-Ring angeordnet sein. Die Ringe 1a, 1b können metallisch verstärkt sein.

Gemäß den in Fig. 3 und 4 dargestellten Ausführungsformen sind die beiden Ringe 1a, 1b mit metallischen Verstärkungseinlagen versehen, die - wie dargestellt und bevorzugt - in Form von Stahlringeinlagen 11 oder auch als Streckmetall-, Drahtgewebeeinlagen od.dgl. ausgebildet sein können. Die metallischen Verstärkungseinlagen verbessern die Stabilität der Flanschdichtung gegen ein Herauspressen aus dem Dichtspalt während des Einspannens. Gemäß Fig. 3 verlaufen die Stahlringeinlagen 11 etwa parallel zu den Flächen 3 bzw. 4 der Ringe 1a, 1b und gemäß Fig. 4 etwa parallel zu den Außenflächen 10 der Ringe 1a, 1b.

## Patentansprüche

1. Ringförmige Flanschdichtung aus einem gummielastischen Werkstoff, die zwei Ringe (1a, 1b) umfaßt, welche quer zur Ringachse (2) keilförmig ausgebildet sind und an einander zugekehrten Seiten senkrecht zur Ringachse (2) über plane Flächen (3, 4) aneinander grenzen, so dass die beiden Ringe (1a, 1b) dort verdrehbar miteinander in Schnappeingriff stehen.

2. Flanschdichtung nach Anspruch 1, **dadurch gekennzeichnet, daß** an einer der einander zugekehrten Flächen der Ringe (1a) eine von einer Nase (6) begrenzte umlaufende Nut (7) angeordnet ist, in die eine am anderen Ring (1b) ausgebildete Nase (9) eingeschnappt ist.

3. Flanschdichtung nach Anspruch 2, **dadurch gekennzeichnet, daß** die umlaufende Nut (7) zur Innenseite des zugehörigen Rings (1a) offen ist.

4. Flanschdichtung nach Anspruch 2 oder 3, **dadurch gekennzeichnet, daß** die Nase (9) in Einführrichtung abgeschrägt ist.

5. Flanschdichtung nach einem der Ansprüche 1 bis 4, **dadurch gekennzeichnet, daß** die den planen Flächen (3, 4) gegenüberliegenden Außenflächen der Ringe (1a, 1b) bombiert sind.

6. Flanschdichtung nach einem der Ansprüche 1 bis 5, **dadurch gekennzeichnet, daß** zwischen den beiden Ringen (1a, 1b) ein O-Ring aufgenommen ist.

7. Flanschdichtung nach einem der Ansprüche 1 bis 6, **dadurch gekennzeichnet daß** beide Ringe (1a, 1b) je eine metallische Verstärkungseinlage aufweisen.

8. Flanschdichtung nach Anspruch 7, **dadurch gekennzeichnet, daß** die Verstärkungseinlage eine Stahlringeinlage (11) ist.

9. Flanschdichtung nach Anspruch 8, **dadurch gekennzeichnet, daß** die Stahlringeinlagen (11) im wesentlichen parallel zu den Außenflächen (10) des jeweiligen Rings (1a, 1b) verlaufen.

10. Flanschdichtung nach Anspruch 8, **dadurch gekennzeichnet, daß** die Stahlringeinlagen (11) im wesentlichen parallel zu den planen Flächen (3, 4) verlaufen.

## Claims

1. Annular flange seal made of a rubber-elastic material, comprising two rings (1a, 1b) which are developed in a wedge-shaped form transverse to the axis of the ring (2) and which abut with planar surfaces (3, 4) on sides facing each other perpendicular to the axis of the ring (2), such that the two rings (1a, 1b) are located rotatably in relation to each other in a snap-fit engagement.

2. Flange seal in accordance with Claim 1, wherein a circumferential groove (7) bordered by a projection (6) is arranged on one of the facing surfaces of the rings (1a), with a projection (9) developed on the other ring (1b) snapping into said groove.

3. Flange seal in accordance with Claim 2, wherein the circumferential groove (7) is open toward the inner side of the corresponding ring (1a).

4. Flange seal in accordance with Claim 2 or 3, wherein the projection (9) is tapered in the direction of insertion.

5. Flange seal in accordance with any one of Claims 1 to 4, wherein the outer surfaces of the rings (1a, 1b) facing the planar surfaces (3, 4) are convex.

6. Flange seal in accordance with any one of Claims 1 to 5, wherein an O-ring is accommodated between the two rings (1a, 1b).

7. Flange seal in accordance with any one of Claims 1 to 6, wherein both rings (1a, 1b) are each provided with a metallic reinforcing insert.

8. Flange seal in accordance with Claim 7, wherein the reinforcing insert is a steel ring insert (11).

9. Flange seal in accordance with Claim 8, wherein the steel ring inserts (11) extend essentially parallel to the outer surfaces (10) of each ring (1a, 1b).

10. Flange seal in accordance with Claim 8, wherein the steel ring inserts (11) extend essentially parallel to the planar surfaces (3, 4).

## Revendications

1. Joint de bride annulaire fait d'un matériau élastique caoutchouteux, comprenant deux anneaux (1a, 1b) ayant une forme cunéiforme perpendiculairement à l'axe de l'anneau (2) et contigus l'un à l'autre sur des faces tournées l'une vers l'autre perpendiculairement à l'axe de l'anneau (2) par des surfaces planes (3, 4), de sorte que les deux anneaux (1a, 1b) s'emboîtent l'un avec l'autre à cet endroit avec possibilité de rotation.

2. Joint de bride selon la revendication 1, **caractérisé en ce qu'**il est prévu sur l'une des surfaces tournées l'une vers l'autre des anneaux (1a) une gorge continue (7) délimitée par un ergot (6), dans laquelle s'emboîte un ergot (9) formé sur l'autre anneau (1b).

3. Joint de bride selon la revendication 2, **caractérisé en ce que** la gorge continue (7) est ouverte vers l'intérieur de l'anneau (1a) correspondant.

4. Joint de bride selon la revendication 2 ou 3, **caractérisé en ce que** l'ergot (9) est biseauté dans le sens de l'introduction.

5. Joint de bride selon l'une des revendications 1 à 4, **caractérisé en ce que** les surfaces extérieures des anneaux (1a, 1b) opposées aux surfaces planes (3, 4) sont bombées.

6. Joint de bride selon l'une des revendications 1 à 5, **caractérisé en ce qu'**un joint torique est logé entre les anneaux (1a, 1b).

7. Joint de bride selon l'une des revendications 1 à 6, **caractérisé en ce que** les deux anneaux (1a, 1b) possèdent chacun un insert de renfort métallique.

8. Joint de bride selon la revendication 7, **caractérisé en ce que** l'insert de renfort est un insert annulaire en acier (11).

9. Joint de bride selon la revendication 8, **caractérisé en ce que** les inserts annulaires en acier (11) sont pour l'essentiel parallèles aux surfaces extérieures (10) de chaque anneau (1a, 1b).

10. Joint de bride selon la revendication 8, **caractérisé en ce que** les inserts annulaires en acier (11) sont pour l'essentiel parallèles aux surfaces planes (3, 4).
